(19) **Europäisches Patentamt / European Patent Office / Office européen des brevets**

(11) **EP 4 700 144 A1**

(12) **EUROPEAN PATENT APPLICATION**
published in accordance with Art. 153(4) EPC

(43) Date of publication:
**25.02.2026 Bulletin 2026/09**

(21) Application number: **24792764.3**

(22) Date of filing: **19.04.2024**

(51) International Patent Classification (IPC):
**C22C 38/00** *(2006.01)*   **B23K 26/00** *(2014.01)*
**B23K 26/364** *(2014.01)*   **C21D 8/12** *(2026.01)*
**C22C 38/60** *(2006.01)*   **H01F 1/147** *(2006.01)*

(52) Cooperative Patent Classification (CPC):
**B23K 26/00; B23K 26/364; C21D 8/12;
C22C 38/00; C22C 38/60; H01F 1/147**

(86) International application number:
**PCT/JP2024/015582**

(87) International publication number:
**WO 2024/219492 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.04.2023 JP 2023068925**

(71) Applicant: **NIPPON STEEL CORPORATION
Chiyoda-ku
Tokyo 100-8071 (JP)**

(72) Inventors:
• **WADA, Naoki**
  **Tokyo 100-8071 (JP)**
• **HAMAMURA, Hideyuki**
  **Tokyo 100-8071 (JP)**
• **TAKAHASHI, Masaru**
  **Tokyo 100-8071 (JP)**

(74) Representative: **Vossius & Partner
Patentanwälte Rechtsanwälte mbB
Siebertstrasse 3
81675 München (DE)**

(54) **GRAIN-ORIENTED ELECTROMAGNETIC STEEL SHEET AND METHOD FOR MANUFACTURING SAME**

(57)    This grain-oriented electrical steel sheet includes a steel sheet including a plurality of grooves elongated in a direction intersecting with a rolling direction. When the average of average depths in the elongated direction of all grooves of the plurality of grooves is denoted by d in a unit of $\mu$m, and a standard deviation of the average depth in the elongated direction is denoted by $\sigma$ in a unit of $\mu$m, three or more-type average depths in the elongated direction of the plurality of grooves are provided, a magnetic flux density $B8_A$ is 1.795 to 1.975 T, and the $B8_A$, the $\sigma$, and the d satisfy the following formula:

$$-4.0 \times B8_A + 7.80 \leq \sigma/d \leq -4.0 \times B8_A + 9.00.$$

FIG. 2B

**Description**

TECHNICAL FIELD

The present invention relates to a grain-oriented electrical steel sheet and a method for manufacturing the same.

Priority is claimed on Japanese Patent Application No. 2023-068925, filed April 20, 2023, the content of which is incorporated herein by reference.

BACKGROUND ART

A grain-oriented electrical steel sheet is a soft magnetic material, and is mainly used as a core material of a transformer. Thus, the grain-oriented electrical steel sheet is required to have magnetic characteristics such as high magnetization characteristics and a low iron loss.

The iron loss is a loss due to thermal energy consumption that occurs in a case where a core is excited by an AC magnetic field, and the iron loss is required to be as low as possible from the viewpoint of energy saving. The level of the iron loss is affected by magnetic susceptibility, a sheet thickness, a coating tension, an impurity amount, an electric resistivity, a crystal grain size, a magnetic domain width, and the like. Even at present when various techniques have been developed regarding the grain-oriented electrical steel sheet, research and development for reducing the iron loss is being continued in order to increase energy conversion efficiency.

A technique for performing laser irradiation has been proposed as one of methods for reducing the iron loss. In this technique, strain is introduced to a surface by the laser irradiation, and a 180° magnetic domain width is refined. As a result, the eddy-current loss that is a part of the iron loss can be reduced.

For example, Patent Document 1 discloses a method for manufacturing a grain-oriented electrical steel sheet in which a magnetic domain is controlled by irradiation with a laser beam. The method includes a step of irradiating a surface of the grain-oriented electrical steel sheet with a condensed continuous wave laser beam while scanning the surface in a direction inclined from a rolling direction of the grain-oriented electrical steel sheet, and a step of repeating a portion scanned with the continuous wave laser beam while shifting the portion at a predetermined interval. When the average power of the continuous wave laser beam is represented as P (W), the scanning speed is represented as Vc (mm/s), the predetermined interval is represented as PL (mm), and an input energy Ua is defined as $Ua = P/(Vc \times PL)$ $(mJ/mm^2)$, $1.0$ mm $\leq$ PL $\leq$ 3.0 mm, and 0.8 mJ/mm$^2$ $\leq$ Ua $\leq$ 2.0 mJ/mm$^2$ are satisfied.

Patent Document 1 discloses that iron losses in both directions of an L direction and a C direction of the grain-oriented electrical steel sheet can be reduced easily while ensuring high productivity.

However, for example, in a case where a wound core is manufactured, since the grain-oriented electrical steel sheet is bent and formed, stress relief annealing is required. Accordingly, in such a method, the strain introduced into the grain-oriented electrical steel sheet is released by the stress relief annealing. Thus, an effect of magnetic domain refinement by the laser irradiation disappears.

Thus, it has been proposed that the 180° magnetic domain width is refined to reduce the eddy-current loss by forming a groove in a sheet surface as in the case of strain introduction. In such a case, since the groove remains even though the stress relief annealing is performed, the effect of magnetic domain refinement does not disappear.

Examples of the method for forming a groove in a steel sheet include an electrolytic etching method for forming a groove on a sheet surface of a grain-oriented electrical steel sheet by electrolytic etching, a gear pressing method for forming a groove on a sheet surface of a grain-oriented electrical steel sheet by mechanically pressing a gear on the sheet surface, and a laser irradiation method for melting and evaporating a steel sheet by laser irradiation (area irradiated with laser). For example, Patent Document 2 discloses a method for improving iron loss characteristics of grain-oriented electrical steel sheets to which stress relief annealing can be applied, in which irradiation is performed by controlling a laser beam and a recessed portion having a width of 0.5 mm or less and a depth of 10 $\mu$m or more is formed in a rolling direction.

Citation List

Patent Documents

Patent Document 1: Japanese Patent No. 4669565
Patent Document 2: Japanese Unexamined Patent Application, First Publication No. H06-57335

SUMMARY OF INVENTION

Technical Problem

As in Patent Document 2, in the grain-oriented electrical steel sheet, a groove is formed on a surface of a steel sheet approximately parallel to the width direction, so that a magnetic domain is refined, and the eddy-current loss that is a part of the iron loss is reduced. When the groove is deep, the magnetic domain refinement effect is increased, whereas the amount of reduction in magnetic flux density (for example, B8, which refers to the magnetic flux density at a magnetic field strength of 800 A/m) increases. That is, the magnetic domain refinement effect due to the formation of the groove and the magnetic flux density are generally in a trade-off relationship.

Therefore, it is not possible in the related art to sufficiently greatly reduce the iron loss while minimizing the reduction in the magnetic flux density, and there is room for improvement.

Therefore, an object of the present invention is to provide a grain-oriented electrical steel sheet that achieves both a high magnetic flux density and a low iron loss, and a method for manufacturing the same.

Solution to Problem

The present inventors have studied a method for reducing iron loss while minimizing the reduction in magnetic flux density on the premise of a method for performing magnetic domain refinement by forming grooves.

As a result, the present inventors have found that it is usual in the related art to form grooves having a uniform size (depth and width) on the entire steel sheet, but the iron loss can be reduced while minimizing the reduction in the magnetic flux density by varying the size (in particular, the depth) of grooves within a certain range according to the magnetic flux density of the steel sheet before groove formation.

The present invention has been made in view of the above findings. The gist of the present invention is as follows.

[1] A grain-oriented electrical steel sheet according to an aspect of the present invention including a steel sheet including a plurality of grooves elongated in a direction intersecting a rolling direction, in which when an average of average depths in an elongated direction of all grooves of the plurality of grooves is denoted by d in a unit of $\mu$m, and a standard deviation of the average depths in the elongated direction is denoted by $\sigma$ in a unit of $\mu$m, three or more-type average depths in the elongated direction of the plurality of grooves are provided, a magnetic flux density $B8_A$ is 1.795 to 1.975 T, and the $B8_A$, the $\sigma$, and the d satisfy Formula (1).

$$-4.0 \times B8_A + 7.80 \le \sigma/d \le -4.0 \times B8_A + 9.00 \qquad (1)$$

[2] In the grain-oriented electrical steel sheet according to [1], the average depth in the elongated direction of each groove of the plurality of grooves may be 5.0 to 40.0 $\mu$m, and a width of each groove of the plurality of grooves may be 10.0 to 200.0 $\mu$m.

[3] In the grain-oriented electrical steel sheet according to [1], an interval between the plurality of grooves in the rolling direction may be 2 to 10 mm, and the direction intersecting the rolling direction may be a direction of 60 to 120 degrees with respect to the rolling direction.

[4] In the grain-oriented electrical steel sheet according to [2], an interval between the plurality of grooves in the rolling direction may be 2 to 10 mm, and the direction intersecting the rolling direction may be a direction of 60 to 120 degrees with respect to the rolling direction.

[5] **In** the grain-oriented electrical steel sheet according to any one of [1] to [4], the average depths in the elongated direction of the plurality of grooves may vary periodically in the rolling direction, and a period thereof may be 10 to 50 mm.

[6] In the grain-oriented electrical steel sheet according to any one of [1] to [4], a ratio of average depths in the elongated direction of adjacent grooves of the plurality of grooves may be less than 1.4.

[7] In the grain-oriented electrical steel sheet according to [5], a ratio of average depths in the elongated direction of adjacent grooves of the plurality of grooves may be less than 1.4.

[8] A method for manufacturing a grain-oriented electrical steel sheet according to another aspect of the present invention includes a groove forming step of forming a plurality of grooves in a rolling direction, each being elongated in a direction intersecting the rolling direction, by irradiating a surface of the grain-oriented electrical steel sheet having a magnetic flux density $B8_B$ of 1.820 to 2.000 T with a laser, and in the groove forming step, when an average value of average depths of all grooves of the plurality of grooves in an elongated direction is denoted by d in a unit of $\mu$m, and a standard deviation of the average depths in the elongated direction is denoted by $\sigma$ in a unit of $\mu$m, conditions are set for the $B8_B$, the d, and the $\sigma$ to satisfy Formula (2).

$$-4.0 \times B8_B + 7.90 \le \sigma/d \le -4.0 \times B8_B + 9.10 \qquad (2)$$

[9] In the method for manufacturing a grain-oriented electrical steel sheet according to [8], the conditions may be set by changing a laser power or by displacing a position of any one or more optical components on a laser optical path.

Advantageous Effects of Invention

According to the above-described aspects of the present invention, it is possible to provide the grain-oriented electrical steel sheet that achieves both a high magnetic flux density and a low iron loss, and the method for manufacturing the same.

BRIEF DESCRIPTION OF DRAWINGS

[FIG. 1] A diagram illustrating an example of a state where grooves of a grain-oriented electrical steel sheet according to the present embodiment is formed.
[FIG. 2A] A diagram illustrating an example of a cross-sectional shape of the grooves of the grain-oriented electrical steel sheet according to the present embodiment in a sheet thickness direction.
[FIG. 2B] A diagram illustrating an example of a cross-sectional shape of the grooves of the grain-oriented electrical steel sheet according to the present embodiment in the sheet thickness direction, and illustrating a case where the depths of the grooves periodically vary.

DESCRIPTION OF EMBODIMENTS

A grain-oriented electrical steel sheet according to an embodiment of the present invention (grain-oriented electrical steel sheet according to the present embodiment) and a method for manufacturing the same will be described.

<grain-oriented electrical steel sheet>

A grain-oriented electrical steel sheet according to the present embodiment includes a steel sheet having a plurality of grooves elongated in a direction intersecting a rolling direction.
In addition, when the average value of the average depths of all grooves of the plurality of grooves in an elongated direction is denoted by d in the unit of $\mu$m, and a standard deviation of the average depths in the elongated direction is denoted by $\sigma$ in the unit of $\mu$m, the grain-oriented electrical steel sheet according to the present embodiment has three or more-type average depths in the elongated direction of the plurality of grooves, a magnetic flux density $B8_A$ of 1.795 to 1.975 T, and the $B8_A$, the $\sigma$, and the d satisfy Formula (1).

$$-4.0 \times B8_A + 7.80 \leq \sigma/d \leq -4.0 \times B8_A + 9.00 \qquad (1)$$

Each will be described.

[Steel Sheet]

(Groove)

As described above, in a case of performing magnetic domain refinement by forming grooves, conventionally, it is common to form a plurality of grooves having a uniform size (depth and width) in approximately parallel rows over the entire steel sheet.
However, as a result of various changes in the size of the grooves studied by the present inventors, it has been found that there are conditions under which the magnetic flux density B8 (referred to as $B8_A$ in the present embodiment) after groove formation increases at the same iron loss, by setting the average value of the average depths and the variation range (standard deviation) of the average depths of the plurality of grooves within a range corresponding to the magnetic flux density.
Therefore, as will be described later, when the average value of average depths of all grooves of a plurality of grooves in an elongated direction is denoted by d in the unit of $\mu$m, and a standard deviation of the average depths in the elongated direction is denoted by $\sigma$ in the unit of $\mu$m, the grain-oriented electrical steel sheet according to the present embodiment is obtained by forming, in the rolling direction, the plurality of grooves elongated in the direction intersecting the rolling direction, the plurality of grooves being formed by irradiating a sheet surface of the grain-oriented electrical steel sheet having a magnetic flux density $B8_B$ of 1.820 to 2.000 T with a laser such that the $B8_B$, d, and $\sigma$ satisfy Formula (2).

$$-4.0 \times B8_B + 7.90 \leq \sigma/d \leq -4.0 \times B8_B + 9.10 \qquad (2)$$

As a result, the grain-oriented electrical steel sheet according to the present embodiment includes the grooves such that the magnetic flux density $B8_A$ is 1.795 to 1.975 T, and $B8_A$, $\sigma$, and d satisfy Formula (1).

$$-4.0 \times B8_A + 7.80 \leq \sigma/d \leq -4.0 \times B8_A + 9.00 \qquad (1)$$

In a case where Formula (1) is satisfied, both a high magnetic flux density and a low iron loss can be achieved.
The preferred range is as follows.

$$-4.0 \times B8_A + 8.00 \leq \sigma/d \leq -4.0 \times B8_A + 9.00 \qquad (1')$$

The reason why the average depth in the elongated direction of the grooves (hereinafter, it may be simply referred to as the groove average depth or the groove depth) and the standard deviation $\sigma$ thereof provide good characteristics for B8 and iron loss is not clear, but the following mechanism is considered. That is, in the grain-oriented electrical steel sheet, magnetic characteristics are improved by accumulating crystal orientations in a direction close to the Goss orientation. However, in an actual (industrially manufactured) grain-oriented electrical steel sheet, variations occur in the crystal orientation (variations occur in the development degree of the Goss orientation). **In** a case where a similar iron loss reduction effect is obtained, it is presumed that, for crystal grains having orientations close to the Goss orientation, the groove depth may be relatively shallow, whereas for crystal grains having significant orientation differences from the Goss orientation, deeper grooves are necessary. Therefore, it is presumed that the effect is increased by forming the grooves such that the groove depths vary in the rolling direction according to the development degree of the Goss orientation rather than making the groove depth constant. For example, in a case where the magnetic flux density of the entire steel sheet is high, the crystal orientation of each grain is mostly close to the accurate Goss orientation, resulting in a small variation in the crystal orientation. On the other hand, in a case where the magnetic flux density of the entire steel sheet is low, it is presumed that the crystal orientation of each crystal grain is close to the accurate Goss orientation, whereas there are a certain number of crystals that have a large deviation angle from the Goss orientation, resulting in a large variation in the crystal orientation. Therefore, it is considered effective to cause variation in the groove depths in the rolling direction according to the magnetic flux density of the entire steel sheet. (In the grain-oriented electrical steel sheet, since the crystal orientation is basically manufactured with the aim of achieving the accurate Goss orientation, a state in which the variation in the crystal orientation is small and the entire magnetic flux density is low is not assumed.)
It is preferable that three or more-type groove depths (average depths in the elongated direction) are used, and the ratio of the average depths in the elongated direction of adjacent grooves is all less than 1.4.
Providing three or more-type groove depths (average depths in the elongated direction) allows the formation of grooves with depths corresponding to the deviation angle of the crystal orientation of each grain from the Goss orientation as compared to the case where two types are used, resulting in the effect of efficiently reducing iron loss.
In addition, considering that the crystal grain size is generally on the order of several mm to 10 mm in the grain-oriented electrical steel sheet, there is a high possibility that adjacent grooves are formed on the same crystal grain. It is assumed that the groove depths formed on the same crystal grain are set to be approximately the same in order to provide favorable characteristics to B8 and iron loss. Therefore, it is preferable that the variation in the depth between adjacent grooves is small. Specifically, the ratio of the average depths in the elongated direction of adjacent grooves is preferably less than 1.4. When the variation in the depths between the adjacent grooves is too large, the groove depths formed on the same crystal grain are different from each other. Therefore, there is a concern that although a sufficient iron loss reduction effect is obtained in the shallow groove, forming deeper grooves results in a large reduction in the magnetic flux density.
In addition, the difference between the average depths of the shallowest groove and the deepest groove in the elongated direction is preferably 8.0 $\mu$m or more. In this case, grooves having depths corresponding to a crystal grain having a large deviation angle from the Goss orientation and a crystal grain having a small deviation angle from the Goss orientation can be obtained, so that an effect of efficiently reducing the iron loss can be obtained.
In a case where the ratio of the average depths in the elongated direction of adjacent grooves is decreased while the difference between the average depths of the shallowest groove and the deepest groove in the elongated direction is increased, the variation in the average depths in the elongated direction is preferably periodic. Since the variation is periodic, it is possible to increase the difference between the average depths of the shallowest groove and the deepest groove in the elongated direction while minimizing the variation in the depths in the adjacent grooves within a certain range. Examples of the periodic variation include a case where the groove depths (average depths in the elongated direction) have a sinusoidal-wave profile in the rolling direction.

The (variation) period is preferably 10 to 50 mm. When the period is less than 10 mm, there is a concern that the variation in the depths between the adjacent grooves may increase. On the other hand, when the period is more than 50 mm, the effect of varying the depths decreases.

The groove depths need to have a constant variation, but the width may be constant.

Among the plurality of grooves, the size of each groove is not necessarily limited, but the average depth in the elongated direction of each groove is preferably 5.0 to 40.0 μm, and the width of each groove of the plurality of grooves is preferably 10.0 to 200.0 μm.

Within this range, the iron loss reduction effect is increased.

The plurality of grooves each have an interval of 2 to 10 mm in the rolling direction. The interval between the grooves is a distance from a center of the groove in a width direction to a center of an adjacent groove in the width direction.

In addition, the direction along which a groove is elongated is preferably a direction intersecting the rolling direction and a direction at 60 to 120 degrees with respect to the rolling direction. Since the direction along which a groove is elongated is preferable to be closer to a direction orthogonal to the rolling direction, the direction is more preferably at 75 to 115 degrees with respect to the rolling direction. The plurality of grooves are preferably substantially parallel to each other.

In a case where the elongated direction and the interval of the grooves are within the above ranges, the iron loss reduction effect increases.

The average depths of all grooves in the elongated direction (the average depths of the grooves in the elongated direction) and the average widths of all grooves can be measured using a laser microscope (3D laser microscope using a confocal optical system by a pinhole).

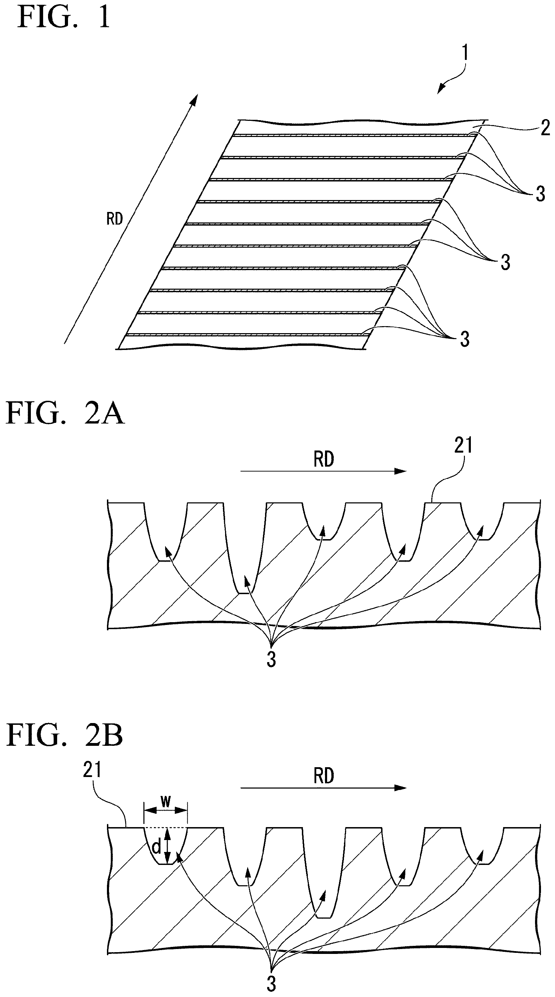

Specifically, by using a laser microscope, the maximum depth (the depth (the distance in the sheet thickness direction from the imaginary line extending the surface) from the sheet surface (in a case where an insulating coating is provided, a surface of a base steel sheet excluding the insulating coating), and d in FIG. 2B) is measured in the groove cross section orthogonal to the elongated direction of the grooves at five or more sites away from each other by 1 mm or more. The insulating coating can be removed by performing immersion in an aqueous sodium hydroxide solution at 80°C containing 30 mass% of NaOH + 70 mass% of $H_2O$ for 20 minutes, then washing the insulating coating with water, and finally drying with a warm air blower for 1 minute or more. The average value of the measurement values at five or more sites is regarded as the average depth in the elongated direction of the groove.

Similarly, the width (groove opening part, and w in FIG. 2B) at a depth 0.05 times the groove depth (maximum depth) in the groove cross section orthogonal to the elongated direction of the groove is measured using a laser microscope at five or more sites away from each other by 1 mm or more. The average value of the measurement values at five or more sites is regarded as the average width w of each groove.

The average of the average depths in the elongated direction and the standard deviation of the average depths in the elongated direction are calculated by measuring the average depths in the elongated direction for 50 or more and 100 or less grooves continuous in the rolling direction.

That is, the average of the average depths in the elongated direction is calculated by dividing an average depth d1 of the first groove to be targeted in the elongated direction to an average depth di of the i-th groove to be targeted (where $50 \leq i \leq 100$) in the elongated direction by the number i of grooves to be targeted.

$$(d1 + d2 + d3 + ...di)/(i)$$

The standard deviation of the average depths in the elongated direction is obtained by a general method (taking the square root of the unbiased variance) using d1 to di.

The ratio of the average depths in the elongated direction of adjacent grooves is obtained by measuring the average depths in the elongated direction of adjacent grooves for 50 or more and 100 or less continuous grooves in the rolling direction, and then determining the ratio of the average depths in the elongated direction of adjacent grooves for all measured grooves. In a case where all the ratios are less than 1.4, it is determined that the ratio of the average depths in the elongated direction of the adjacent grooves is less than 1.4.

(Chemical Composition)

The chemical composition (in a case where a base steel sheet and a forsterite film and/or an insulating coating are included, the chemical composition includes the base steel sheet excluding the forsterite film and/or the insulating coating) of the grain-oriented electrical steel sheet is not limited as long as it is equivalent to a base steel sheet of a known grain-oriented electrical steel sheet. For example, Si: 2.5 to 4.5%, Mn: 0.010 to 0.150%, C: 0 to 0.085%, acid-soluble Al: 0 to 0.065%, N: 0 to 0.012%, Cr: 0 to 0.300%, Cu: 0 to 0.400%, P: 0 to 0.500%, Sn: 0 to 0.300%, Sb: 0 to 0.300%, Ni: 0 to 1.000%, S: 0 to 0.015%, Se: 0 to 0.015%, Bi: 0 to 0.020%, Nb: 0 to 0.030%, V: 0 to 0.030%, Mo: 0 to 0.030%, Ta: 0 to 0.030%, W: 0 to 0.030%, B: 0 to 0.080%, Ti: 0 to 0.015% in mass% can be contained as the chemical composition. In addition, the grain-oriented electrical steel sheet may contain the above-described elements and the remainder of Fe and impurities.

The chemical composition of the grain-oriented electrical steel sheet (base steel sheet) may be measured by a general analysis method of steel. For example, the chemical component may be measured using ICP-AES (Inductively Coupled Plasma-Atomic Emission Spectrometry). In a case where the forsterite film and the insulating coating to be described later are formed, the chemical component of the base steel sheet may be analyzed after removing the forsterite film and the insulating coating from the grain-oriented electrical steel sheet by a known method such as pickling. Specifically, for example, the chemical component can be specified by acquiring a test piece of 35 mm square from a center position of the base steel sheet after removal of a coating as needed, and performing measurement under a condition based on a calibration curve created in advance using ICPS-8100 manufactured by Shimadzu Corporation or the like (measurement apparatus). C and S, which are difficult to measure using ICP-AES, may be measured by a combustion-infrared absorption method, and N may be measured using an inert gas fusion-thermal conductivity method.

(Sheet Thickness)

The sheet thickness of the grain-oriented electrical steel sheet is not limited, but the sheet thickness of the steel sheet (which means a base steel sheet in a case where the grain-oriented electrical steel sheet includes a forsterite film or an insulating coating) is preferably 0.15 to 0.30 mm. When the sheet thickness is more than 0.30 mm, the classical eddy-current loss tends to increase and the iron loss tends to increase. On the other hand, when the sheet thickness is less than 0.15 mm, the rolling efficiency decreases, which is disadvantageous in terms of productivity and cost.

[Forsterite Film]

[Insulating Coating]

In the grain-oriented electrical steel sheet according to the present embodiment, the forsterite film or insulating coating may be formed on a surface of the steel sheet.

In addition, the insulating coating may be formed on a surface of the forsterite film.

That is, the grain-oriented electrical steel sheet according to the present embodiment may be made of not only a steel sheet but also a forsterite film formed on a steel sheet (base steel sheet) and a surface of the steel sheet, may be made of an insulating coating formed on a steel sheet and a surface of the steel sheet, or may be made of a forsterite film formed on a steel sheet and a surface of the steel sheet and an insulating coating formed on a surface of the forsterite film.

The forsterite film and the insulating coating may be formed on one surface or may be formed on both surfaces.

The forsterite film is an inorganic coating containing magnesium silicate as a main component. The forsterite film is formed by reaction of an annealing separator containing magnesia (MgO) applied to the surface of the base steel sheet with a component of the surface of the base steel sheet in final annealing, and has a composition (more specifically, a composition containing $Mg_2SiO_4$ as a main component) derived from the annealing separator and the component of the base steel sheet.

On the other hand, in a case where an annealing separator mainly containing $Al_2O_3$ is used in the final annealing, the forsterite film may not be formed.

The insulating coating has a function of applying electrical insulation properties or tension to the grain-oriented electrical steel sheet. The tension is applied to the grain-oriented electrical steel sheet to facilitate domain wall movement in the grain-oriented electrical steel sheet, and thus, the iron loss of the grain-oriented electrical steel sheet can be improved.

In addition, according to the insulating coating, various properties such as corrosion resistance, heat resistance, and slippage can be obtained in addition to the electrical insulation properties and the tension as described above.

In the grain-oriented electrical steel sheet according to the present embodiment, the insulating coating may be, for example, a known coating formed by applying a coating solution containing phosphate and colloidal silica as main components to the surface of the forsterite film and baking the coating solution.

<Magnetic Flux Density>

The magnetic flux density B8 ($B8_A$ in the present embodiment) of the grain-oriented electrical steel sheet according to the present embodiment is 1.795 to 1.975 T. This magnetic flux density is higher than that of a conventional grain-oriented electrical steel sheet having an equivalent iron loss.

<Manufacturing Method>

An effect of the grain-oriented electrical steel sheet according to the present embodiment can be obtained regardless of the manufacturing method as long as the grain-oriented electrical steel sheet has the above-described characteristics, but a manufacturing method including the following step is preferable as long as such a manufacturing method enables stable manufacture:

a groove forming step of forming a plurality of grooves in a rolling direction, each being elongated in a direction intersecting the rolling direction, by irradiating a surface of a grain-oriented electrical steel sheet having a magnetic flux density $B8_B$ of 1.820 to 2.000 T with a laser.

The grain-oriented electrical steel sheet to be subjected to the groove forming step is not limited as long as the magnetic flux density B8 (in the present embodiment, B8 before the groove formation is described as $B8_B$) is 1.820 to 2.000 T.

Such a grain-oriented electrical steel sheet can be manufactured by a manufacturing method including the following steps carried out under known conditions:

(I) A hot rolling step of heating and hot-rolling a slab to form a hot rolled sheet,
(II) A hot-rolled sheet annealing step of annealing the hot rolled sheet after the hot rolling step,
(III) A cold rolling step of pickling and cold-rolling the hot rolled sheet after the hot-rolled sheet annealing step to obtain a cold rolled sheet,
(IV) A decarburization annealing step of performing decarburization annealing on the cold rolled sheet, and
(V) A final annealing step of applying an annealing separator to the cold rolled sheet after the decarburization annealing step and performing final annealing.

The steel sheet to be subjected to the groove forming step may be a cold rolled sheet manufactured by a manufacturing method including (I) to (III), and in this case, the steps (IV) and (V) may be performed after the groove forming step.

In this case, a groove may be formed with respect to the cold rolled sheet in which the magnetic flux density $B8_B$ after the final annealing step is assumed to be 1.820 to 2.000 T.

The magnetic flux density after the final annealing step can be assumed from $B8_B$ of a non-magnetic domain control material obtained from a slab manufactured with the same charge and manufactured under the same conditions as the steel sheet subjected to the step after hot rolling.

In a case where an insulating coating is formed on the surface, the following step may be further included after the final annealing step. This condition is not limited, and may be performed under known conditions.

An insulating coating forming step is preferably performed after the final annealing step and after the groove forming step, but may be performed after the final annealing step and before the groove forming step. However, in a case where the insulating coating forming step is performed before the groove forming step, the insulating coating may be peeled off in a groove part formed through the groove forming step. Therefore, it is preferable to form the insulating coating in the groove part again after the groove forming step.

(VI) An insulating coating forming step of forming an insulating coating on a surface of the steel sheet after the final annealing step.

The groove forming step, which is characteristic of obtaining the grain-oriented electrical steel sheet according to the present embodiment, will be described. **In** the other steps, known conditions may be set according to the target magnetic flux density before the groove is formed, and a description thereof is omitted.

[Groove Forming Step]

In the groove forming step, a plurality of grooves, elongated in a direction intersecting a rolling direction, in the rolling direction is formed at predetermined intervals by irradiating a sheet surface of a grain-oriented electrical steel sheet having a magnetic flux density $B8_B$ of 1.820 to 2.000 T with a laser.

When the magnetic flux density $B8_B$ of the subjected steel sheet is less than 1.820 T, a grain-oriented electrical steel sheet with a low iron loss cannot be obtained. On the other hand, it is difficult to achieve more than 2.000 T because it is a region close to a saturation magnetic flux density.

It is preferable for the plurality of grooves to be formed at intervals of 2 to 10 mm in the rolling direction, and for the elongated direction of the grooves to be at an angle of 60 to 120 degrees with respect to the rolling direction.

For the grain-oriented electrical steel sheet, there are no other limitations as long as the $B8_B$ before the groove formation is 1.820 to 2.000 T.

In addition, when the grooves are formed, the conditions are set so that $B8_B$, d, and $\sigma$ satisfy Formula (2), where the average value of the average depths in the elongated direction of all groove of the plurality of grooves formed is denoted by d in the unit of $\mu$m, and a standard deviation of the average depth in the elongated direction is denoted by $\sigma$ in the unit of $\mu$m.

$$-4.0 \times B8_B + 7.90 \leq \sigma/d \leq -4.0 \times B8_B + 9.10 \qquad (2)$$

As described above, in a case where a similar iron loss reduction effect is obtained, it is presumed that, for crystal grains having orientations close to the Goss orientation, the groove depths may be relatively shallow, whereas for crystal grains having significant orientation differences from the Goss orientation, deeper grooves are necessary.

In the method for manufacturing a grain-oriented electrical steel sheet according to the present embodiment, $B8_B$ (B8 before groove formation) is used as an index of the development degree of the Goss direction, and the grooves are formed by setting the groove depths to be formed (average depths in the elongated direction) and its standard deviation to fall within a predetermined range according to $B8_B$.

In a case where $\sigma/d$ is less than $-4.0 \times B8_B + 7.90$, a sufficient iron loss reduction effect cannot be obtained. On the other hand, when $\sigma/d$ is more than $-4.0 \times B8_B + 9.10$, the reduction in the magnetic flux density cannot be sufficiently minimized.

Preferably, the conditions are set so as to satisfy the following.

$$-4.0 \times B8_B + 8.10 \leq \sigma/d \leq -4.0 \times B8_B + 9.10 \qquad (2')$$

In a case where the conditions are set to satisfy Formula (2) (or Formula (2')), it is preferable to set the conditions by changing the laser power or by displacing the position of any one or more optical components on a laser optical path.

Since it is preferable that there is no change in the depth and width of one groove, the laser power and the position of an optical component are not changed while forming one groove (the laser is emitted while scanning is performed in the direction intersecting the rolling direction), but after forming one groove, it is sufficient to change the size of each groove by changing the laser power or displacing the position of the optical component before forming the next groove.

It is possible to form a groove having a predetermined size by checking in advance what kind of groove is formed depending on the laser power and the arrangement of the optical component and then changing the size according to a desired size of the groove to be formed.

Examples of a method for periodically varying the groove depth includes modulating the laser power in a sinusoidal waveform. Another example includes a method for periodically varying the position of a mirror in the laser optical path using an electric actuator.

The period of variation can be changed according to the sheet passing speed and the scan interval.

In a case where the laser power can be periodically modulated, the groove depth can be varied without changing the groove width by changing the arrangement of the optical component (parameter of the optical system) and modulating the laser power accordingly.

The laser irradiation conditions are not limited, and for example, in a case of setting a desired depth and width, it is sufficient that a laser power is set to 200 to 3000 W, a condensed spot diameter of the laser, that is, a diameter that contains 86% of the laser power in the rolling direction of the laser is set to 10 to 1000 $\mu$m, a condensed spot diameter of the laser in the sheet width direction is set to 10 to 1000 $\mu$m, and a laser scanning speed is set to 2 to 50 m/s.

The magnetic flux density $B8_B$ is measured by the following method.

In a case where $B8_B$ is measured on a production line, a value of an iron loss meter on the line is used. In order to convert the value of the iron loss meter into $B8_B$, the relationship between the iron loss and $B8_B$ is determined in advance, and $B8_B$ can be obtained from the measured iron loss value (average value of the whole circumference of a coil). Since the relationship between the iron loss and $B8_B$ varies depending on the components, sheet thickness, and the like, the relationship may be determined in advance for each manufacturing condition. In a case where the magnetic flux density can be measured online, the average value in the coil of the magnetic flux density measured on the line is sufficient to be set to $B8_B$.

In a case where $B8_B$ of the steel sheet can be estimated, it is not necessary to measure $B8_B$ for the entire steel sheet. For example, in a case where $B8_B$ of a non-magnetic domain control material obtained from a slab manufactured with the same charge and manufactured under the same conditions as the steel sheet subjected to the step after hot rolling is known, that value can be used.

Examples

A slab having a chemical composition containing, in mass%, Si: 3.3%, acid-soluble Al: 0.028%, C: 0.060%, N: 0.008%, Mn: 0.120%, Cr: 0.050%, Cu: 0.040%, P: 0.010%, Sn: 0.020%, Ni: 0.005%, and S: 0.007%, with the remainder of Fe and impurities, was prepared.

This slab was heated at 1100°C for 60 minutes and then hot-rolled to obtain a hot rolled sheet having a sheet thickness of 2.6 mm.

Next, the hot rolled sheet was subjected to heat treatment (hot-rolled sheet annealing) at 1100°C for 1 minute.

After the heat treatment, pickling treatment was performed, and then cold rolling was performed to obtain a cold rolled sheet having a thickness of 0.22 mm.

A surface of each cold rolled sheet was irradiated with the laser under the following conditions: a laser power of 1500 W, a condensed spot diameter of the laser of 40 μm in the rolling direction, a condensed spot diameter of the laser of 40 μm in the sheet width direction, and a scanning speed of 45 m/s to form a plurality of grooves elongated in the direction intersecting the rolling direction at uniform intervals of 5 mm in the rolling direction.

When the grooves were formed, the average depths in the elongated direction of the grooves was varied for each groove except for a part thereof. In addition, the variation in the average depths in the elongated direction of the grooves was a periodic variation or a non-periodic variation. In the example in which the formation condition was periodically varied, the shape of the grooves was varied by periodically modulating the laser power. In the example in which the non-periodic variation was applied, the shape of the grooves was varied by randomly varying the laser power.

In a case where the average depths in the elongated direction of the grooves were varied, the average depths in the elongated direction of the grooves were as shown in Table 2.

The magnetic flux density (B8$_B$) of this steel sheet after the final annealing step (that is, after becoming a grain-oriented electrical steel sheet) was estimated from a non-magnetic domain control material that was obtained from a slab manufactured with the same charge, manufactured under the same conditions as the steel sheet subjected to the steps of the hot rolling, hot-rolled sheet annealing, and cold rolling, and further subjected to decarburization annealing, final annealing, and insulating coating formation under the same conditions described below (conditions that will be applied to the subjected steel sheet).

From the steel sheet on which the plurality of grooves were formed, 100 grooves continuous in the rolling direction were observed by the above-described method, and the shapes of the grooves were measured. The shapes of the formed grooves, the standard deviation of the average depths in the elongated direction, and the like were as shown in Tables 1 and 2.

The decarburization annealing was performed on each cold rolled sheet after the formation of the grooves under the condition of a temperature of 850°C for 2 minutes.

An annealing separator containing magnesia as a main component was applied to the surface of the cold rolled sheet that had been decarburization-annealed. The cold rolled sheet to which the annealing separator was applied was coiled into a coil shape and inserted into a furnace, and subjected to final annealing at 1200°C for 20 hours to prepare a steel sheet having a forsterite film (glass coating) formed on a surface of the base steel sheet.

Next, an insulating material containing phosphate and colloidal silica as main components was applied onto the forsterite film, and baked at conditions of 850°C for 1 minute to form an insulating coating.

The chemical compositions of a grain-oriented electrical steel sheet finally obtained was within the following range, in mass%: Si: 3.3%, acid-soluble Al: 0.004% or less, C: 0.001% or less, N: 0.001% or less, Mn: 0.120%, Cr: 0.050%, Cu: 0.040%, P: 0.010%, Sn: 0.020%, Ni: 0.005%, and S: 0.001% or less were contained, with the remainder of Fe and impurities.

[Table 1]

| No. | Steel sheet B8_B before groove formation (T) | Conditions for groove formation Lower limit of Formula (2) | Upper limit of Formula (2) | Determination | Variation | Groove shape Mean of average depth d (μm) | Standard deviation of average depth σ (μm) | σ/d | Lower limit of Formula (1) | Upper limit of Formula (1) | Determination |
|---|---|---|---|---|---|---|---|---|---|---|---|
| 1 | 1.930 | 0.18 | 1.38 | ○ | Present | 17.3 | 10.5 | 0.61 | 0.14 | 1.34 | ○ |
| 2 | 1.930 | 0.18 | 1.38 | ○ | Present | 18.9 | 6.6 | 0.35 | 0.16 | 1.36 | ○ |
| 3 | 1.930 | 0.18 | 1.38 | ○ | Present | 16.1 | 11.6 | 0.72 | 0.17 | 1.37 | ○ |
| 4 | 1.930 | 0.18 | 1.38 | ○ | Present | 19.0 | 14.2 | 0.75 | 0.17 | 1.37 | ○ |
| 5 | 1.930 | 0.18 | 1.38 | × | Absent | 24.6 | 0.1 | 0.00 | 0.18 | 1.38 | × |
| 6 | 1.930 | 0.18 | 1.38 | × | Present | 24.8 | 0.3 | 0.01 | 0.18 | 1.38 | × |
| 7 | 1.930 | 0.18 | 1.38 | × | Present | 12.4 | 18.1 | 1.46 | 0.19 | 1.39 | × |
| 8 | 1.930 | 0.18 | 1.38 | ○ | Present | 17.1 | 7.8 | 0.46 | 0.18 | 1.38 | ○ |
| 9 | 1.850 | 0.50 | 1.70 | ○ | Present | 16.4 | 10.6 | 0.65 | 0.42 | 1.62 | ○ |
| 10 | 1.850 | 0.50 | 1.70 | ○ | Present | 10.4 | 13.2 | 1.27 | 0.42 | 1.62 | ○ |
| 11 | 1.850 | 0.50 | 1.70 | ○ | Present | 13.0 | 7.0 | 0.54 | 0.43 | 1.63 | ○ |
| 12 | 1.850 | 0.50 | 1.70 | ○ | Present | 12.1 | 9.1 | 0.75 | 0.43 | 1.63 | ○ |
| 13 | 1.850 | 0.50 | 1.70 | × | Absent | 9.0 | 0.1 | 0.01 | 0.44 | 1.64 | × |
| 14 | 1.850 | 0.50 | 1.70 | × | Present | 10.9 | 0.4 | 0.04 | 0.46 | 1.66 | × |
| 15 | 1.850 | 0.50 | 1.70 | × | Present | 11.2 | 19.5 | 1.74 | 0.45 | 1.65 | × |
| 16 | 1.850 | 0.50 | 1.70 | × | Present | 16.5 | 7.5 | 0.45 | 0.44 | 1.64 | ○ |
| 17 | 1.965 | 0.04 | 1.24 | ○ | Present | 14.8 | 7.5 | 0.51 | -0.01 | 1.19 | ○ |
| 18 | 1.965 | 0.04 | 1.24 | ○ | Present | 18.5 | 7.2 | 0.39 | 0.00 | 1.20 | ○ |
| 19 | 1.965 | 0.04 | 1.24 | ○ | Present | 10.1 | 11.0 | 1.09 | -0.01 | 1.19 | ○ |
| 20 | 1.965 | 0.04 | 1.24 | ○ | Present | 15.9 | 6.0 | 0.38 | 0.00 | 1.20 | ○ |
| 21 | 1.965 | 0.04 | 1.24 | × | Absent | 14.8 | 0.1 | 0.01 | 0.02 | 1.22 | × |
| 22 | 1.965 | 0.04 | 1.24 | × | Present | 15.3 | 0.1 | 0.01 | 0.01 | 1.21 | × |
| 23 | 1.965 | 0.04 | 1.24 | × | Present | 12.1 | 15.4 | 1.27 | 0.02 | 1.22 | × |

(continued)

| | Steel sheet | Conditions for groove formation | | | | | Groove shape | | | | | |
|---|---|---|---|---|---|---|---|---|---|---|---|---|
| No. | B8_B before groove formation | Lower limit of Formula (2) | Upper limit of Formula (2) | Determination | Variation | Mean of average depth d | Standard deviation of average depth σ | σ/d | Lower limit of Formula (1) | Upper limit of Formula (1) | Determination |
| | T | - | - | | | μm | μm | - | - | - | |
| 24 | 1.965 | 0.04 | 1.24 | ○ | Present | 18.1 | 8.0 | 0.44 | 0.02 | 1.22 | ○ |

[Table 2]

| No. | Groove shape | | | | | | | | | |
|---|---|---|---|---|---|---|---|---|---|---|
| | Minimum average depth in elongated direction | Maximum average depth in elongated direction | Difference between average depths in elongated direction | Minimum average width | Maximum average width | Angle with rolling direction | Groove interval | Period of variation in groove depth d | Maximum ratio of average depths of adjacent grooves in elongated direction | Types of groove depth |
| | μm | μm | μm | μm | μm | deg. | mm | mm | - | - |
| 1 | 5.4 | 40.0 | 34.6 | 12.4 | 180.5 | 90 | 5 | 20 | 1.1 | 20 |
| 2 | 10.2 | 31.4 | 21.2 | 32.4 | 154.7 | 90 | 5 | 20 | 1.1 | 10 |
| 3 | 5.1 | 39.7 | 34.6 | 17.8 | 165.2 | 90 | 5 | 20 | 1.7 | 15 |
| 4 | 5.9 | 36.7 | 30.8 | 15.8 | 150.2 | 90 | 5 | -(aperiodic) | 1.8 | 10 |
| 5 | 24.5 | 24.7 | 0.2 | 80.3 | 84.5 | 90 | 5 | - | 1.0 | 1 |
| 6 | 24.5 | 27.8 | 3.3 | 15.7 | 89.4 | 90 | 5 | 20 | 1.0 | 3 |
| 7 | 5.3 | 55.0 | 49.7 | 10.2 | 100.1 | 90 | 5 | 20 | 2.5 | 2 |
| 8 | 12.0 | 23.2 | 11.2 | 25.1 | 41.0 | 90 | 5 | 20 | 1.9 | 2 |
| 9 | 5.1 | 35.5 | 30.4 | 38.7 | 158.4 | 90 | 5 | 20 | 1.3 | 20 |
| 10 | 5.2 | 39.7 | 34.5 | 11.8 | 178.4 | 90 | 5 | 20 | 1.7 | 15 |
| 11 | 5.2 | 25.8 | 20.6 | 20.1 | 132.7 | 90 | 5 | 20 | 1.2 | 10 |
| 12 | 10.2 | 39.4 | 29.2 | 15.7 | 174.5 | 90 | 5 | -(aperiodic) | 1.4 | 10 |
| 13 | 8.9 | 9.2 | 0.3 | 18.7 | 21.4 | 90 | 5 | - | 1.0 | 1 |
| 14 | 10.1 | 11.2 | 1.1 | 50.7 | 100.4 | 90 | 5 | 20 | 1.0 | 2 |
| 15 | 5.4 | 60.1 | 54.7 | 14.7 | 100.0 | 90 | 5 | 20 | 3.1 | 2 |
| 16 | 13.0 | 23.1 | 10.1 | 14.7 | 100.0 | 90 | 5 | 20 | 1.9 | 2 |
| 17 | 7.2 | 30.2 | 23.0 | 15.8 | 164.7 | 90 | 5 | 20 | 1.2 | 15 |
| 18 | 10.8 | 31.2 | 20.4 | 20.1 | 150.3 | 90 | 5 | 20 | 1.2 | 10 |
| 19 | 5.1 | 40.0 | 34.9 | 10.4 | 176.9 | 90 | 5 | 20 | 2.0 | 10 |
| 20 | 9.7 | 30.2 | 20.5 | 17.8 | 198.7 | 90 | 5 | -(aperiodic) | 1.3 | 10 |
| 21 | 14.6 | 14.9 | 0.3 | 38.5 | 41.2 | 90 | 5 | - | 1.0 | 1 |

(continued)

| No. | Groove shape | | | | | | | | | |
|---|---|---|---|---|---|---|---|---|---|---|
| | Minimum average depth in elongated direction | Maximum average depth in elongated direction | Difference between average depths in elongated direction | Minimum average width | Maximum average width | Angle with rolling direction | Groove interval | Period of variation in groove depth d | Maximum ratio of average depths of adjacent grooves in elongated direction | Types of groove depth |
| | μm | μm | μm | μm | μm | deg. | mm | mm | - | - |
| 22 | 15.0 | 15.4 | 0.4 | 22.6 | 132.1 | 90 | 5 | 20 | 1.0 | 3 |
| 23 | 4.9 | 62.1 | 57.2 | 9.7 | 100.0 | 90 | 5 | 20 | 2.4 | 2 |
| 24 | 14.0 | 25.1 | 11.1 | 20.0 | 40.0 | 90 | 5 | 20 | 1.9 | 2 |

A sample of 60 mm in the width direction and 300 mm in the rolling direction was collected from the obtained grain-oriented electrical steel sheet, and a single sheet test (SST) was performed on this sample in accordance with JIS C2556 (2015) to measure an iron loss W17/50 at a frequency of 50 Hz and a maximum magnetic flux density of 1.7 T. In addition, a magnetic flux density B8 (B8$_A$) generated at the time of magnetization at 800 A/m was measured. The results are shown in Table 3.

[Table 3]

| No. | Characteristics of grain-oriented electrical steel sheet | | | | Remarks |
|---|---|---|---|---|---|
| | Iron loss W17/50 | B8$_A$ after groove formation | B8 difference from reference | $\Delta$B8 (B8$_A$-B8$_B$) | |
| | W/kg | T | T | T | |
| 1 | 0.760 | 1.914 | 0.010 | -0.016 | Invention Example |
| 2 | 0.762 | 1.909 | 0.005 | -0.021 | Invention Example |
| 3 | 0.764 | 1.908 | 0.004 | -0.022 | Invention Example |
| 4 | 0.765 | 1.907 | 0.003 | -0.023 | Invention Example |
| 5 | 0.761 | 1.904 | 0.000 | -0.026 | Comparative Example |
| 6 | 0.760 | 1.905 | 0.001 | -0.025 | Comparative Example |
| 7 | 0.763 | 1.902 | -0.002 | -0.028 | Comparative Example |
| 8 | 0.761 | 1.904 | 0.000 | -0.026 | Comparative Example |
| 9 | 0.891 | 1.844 | 0.005 | -0.006 | Invention Example |
| 10 | 0.895 | 1.845 | 0.006 | -0.005 | Invention Example |
| 11 | 0.896 | 1.843 | 0.004 | -0.007 | Invention Example |
| 12 | 0.899 | 1.842 | 0.003 | -0.008 | Invention Example |
| 13 | 0.892 | 1.839 | 0.000 | -0.011 | Comparative Example |
| 14 | 0.894 | 1.835 | -0.004 | -0.015 | Comparative Example |
| 15 | 0.893 | 1.837 | -0.002 | -0.013 | Comparative Example |
| 16 | 0.892 | 1.839 | 0.000 | -0.011 | Comparative Example |
| 17 | 0.733 | 1.952 | 0.006 | -0.013 | Invention Example |
| 18 | 0.731 | 1.951 | 0.005 | -0.014 | Invention Example |
| 19 | 0.735 | 1.953 | 0.007 | -0.012 | Invention Example |
| 20 | 0.738 | 1.949 | 0.003 | -0.016 | Invention Example |
| 21 | 0.733 | 1.946 | 0.000 | -0.019 | Comparative Example |
| 22 | 0.731 | 1.947 | 0.001 | -0.018 | Comparative Example |
| 23 | 0.732 | 1.944 | -0.002 | -0.021 | Comparative Example |
| 24 | 0.733 | 1.946 | 0.000 | -0.019 | Comparative Example |

As can be seen from Tables 1 to 3, in Invention Example Nos. 1 to 4, 9 to 12, and 17 to 20 in which the depths of the grooves are varied so that B8$_B$, d, and $\sigma$ satisfy the Formula (2), the grooves in which B8$_A$, $\sigma$, and d satisfy Formula (1) are formed, and $\Delta$B8 is smaller than that in the example in which the magnetic flux density B8$_B$ before the groove formation was the same and there was no variation in the groove depths (Reference Example Nos. 5, 13, and 21). That is, it was possible to reduce the iron loss while minimizing the reduction in the magnetic flux density. In particular, in the example in which the groove depths were periodically varied, $\Delta$B8 was smaller.

On the other hand, in Nos. 6, 14, and 22 in which B8$_B$, d, and $\sigma$ did not satisfy Formula (2) although the groove depths varied, $\Delta$B8 could not be sufficiently reduced.

In addition, in Nos. 7, 15, and 23 in which B8$_B$, d, and $\sigma$ did not satisfy Formula (2) although there were only two types of groove depth and the groove depths varied, $\Delta$B8 could not be sufficiently reduced.

In Nos. 8, 16, and 24, although B8$_B$, d, and $\sigma$ satisfied Formula (2), $\Delta$B8 could not be sufficiently reduced because there were only two types of groove depths.

INDUSTRIAL APPLICABILITY

According to the present invention, it is possible to provide the grain-oriented electrical steel sheet that achieves both a high magnetic flux density and a low iron loss, and the method for manufacturing the same, and therefore industrial applicability is high.

REFERENCE SIGNS LIST

RD Rolling direction
1 Grain-oriented electrical steel sheet
2 Steel sheet
21 Sheet surface
3 Groove

**Claims**

1. A grain-oriented electrical steel sheet comprising:

    a steel sheet including a plurality of grooves elongated in a direction intersecting a rolling direction, wherein when an average of average depths in an elongated direction of all grooves of the plurality of grooves is denoted by d in a unit of $\mu$m, and a standard deviation of the average depths in the elongated direction is denoted by $\sigma$ in a unit of $\mu$m,
    three or more-type average depths in the elongated direction of the plurality of grooves are provided,
    a magnetic flux density B8$_A$ is 1.795 to 1.975 T, and
    the B8$_A$, the $\sigma$, and the d satisfy Formula (1).

$$-4.0 \times B8_A + 7.80 \leq \sigma/d \leq -4.0 \times B8_A + 9.00 \qquad (1)$$

2. The grain-oriented electrical steel sheet according to claim 1, wherein

    the average depth in the elongated direction of each groove of the plurality of grooves is 5.0 to 40.0 $\mu$m, and a width of each groove of the plurality of grooves is 10.0 to 200.0 $\mu$m.

3. The grain-oriented electrical steel sheet according to claim 1, wherein

    an interval between the plurality of grooves in the rolling direction is 2 to 10 mm, and
    the direction intersecting the rolling direction is a direction of 60 to 120 degrees with respect to the rolling direction.

4. The grain-oriented electrical steel sheet according to claim 2, wherein

    an interval between the plurality of grooves in the rolling direction is 2 to 10 mm, and
    the direction intersecting the rolling direction is a direction of 60 to 120 degrees with respect to the rolling direction.

5. The grain-oriented electrical steel sheet according to any one of claims 1 to 4, wherein

    the average depths in the elongated direction of the plurality of grooves vary periodically in the rolling direction, and
    a period thereof is 10 to 50 mm.

6. The grain-oriented electrical steel sheet according to any one of claims 1 to 4, wherein
    a ratio of average depths in the elongated direction of adjacent grooves of the plurality of grooves is less than 1.4.

7. The grain-oriented electrical steel sheet according to claim 5, wherein
   a ratio of average depths in the elongated direction of adjacent grooves of the plurality of grooves is less than 1.4.

8. A method for manufacturing a grain-oriented electrical steel sheet, the method comprising:

   a groove forming step of forming a plurality of grooves in a rolling direction, each being elongated in a direction intersecting the rolling direction, by irradiating a surface of the grain-oriented electrical steel sheet having a magnetic flux density $B8_B$ of 1.820 to 2.000 T with a laser, wherein
   in the groove forming step, when an average value of average depths of all grooves of the plurality of grooves in an elongated direction is denoted by d in a unit of $\mu$m, and a standard deviation of the average depths in the elongated direction is denoted by $\sigma$ in a unit of $\mu$m, conditions are set for the $B8_B$, the d, and the $\sigma$ to satisfy Formula (2).

$$-4.0 \times B8_B + 7.90 \leq \sigma/d \leq -4.0 \times B8_B + 9.10 \qquad (2)$$

9. The method for manufacturing a grain-oriented electrical steel sheet according to claim 8, wherein
   the conditions are set by changing a laser power or by displacing a position of any one or more optical components on a laser optical path.

FIG. 1

FIG. 2A

FIG. 2B

## INTERNATIONAL SEARCH REPORT

| International application No. |
|---|
| **PCT/JP2024/015582** |

### A. CLASSIFICATION OF SUBJECT MATTER

***C22C 38/00***(2006.01)i; ***B23K 26/00***(2014.01)i; ***B23K 26/364***(2014.01)i; ***C21D 8/12***(2006.01)i; ***C22C 38/60***(2006.01)i; ***H01F 1/147***(2006.01)i

FI:   C22C38/00 303U; C21D8/12 D; C22C38/60; B23K26/00 N; B23K26/364; H01F1/147 183

According to International Patent Classification (IPC) or to both national classification and IPC

### B. FIELDS SEARCHED

Minimum documentation searched (classification system followed by classification symbols)

C22C38/00-C22C38/60; B23K26/00; B23K26/364; C21D8/12; C21D9/46; H01F1/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 114255971 A (BAOSHAN STEEL AND IRON CO., LTD.) 29 March 2022 (2022-03-29) claims, paragraphs [0079]-[0090], tables 1, 2 | 1-4, 6-7 |
| A | | 5, 8-9 |
| A | JP 2021-25074 A (NIPPON STEEL CORP.) 22 February 2021 (2021-02-22) entire text, all drawings | 1-9 |
| A | JP 2020-143314 A (NIPPON STEEL CORP.) 10 September 2020 (2020-09-10) entire text, all drawings | 1-9 |
| A | JP 2017-133051 A (JFE STEEL CORP.) 03 August 2017 (2017-08-03) entire text, all drawings | 1-9 |
| A | JP 2014-73518 A (JFE STEEL CORP.) 24 April 2014 (2014-04-24) entire text, all drawings | 1-9 |

☐ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 July 2024** | **16 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/015582**

| Patent document cited in search report | | | Publication date (day/month/year) | Patent family member(s) | Publication date (day/month/year) |
|---|---|---|---|---|---|
| CN | 114255971 | A | 29 March 2022 | (Family: none) | |
| JP | 2021-25074 | A | 22 February 2021 | (Family: none) | |
| JP | 2020-143314 | A | 10 September 2020 | (Family: none) | |
| JP | 2017-133051 | A | 03 August 2017 | (Family: none) | |
| JP | 2014-73518 | A | 24 April 2014 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023068925 A
- JP 4669565 B

- JP H0657335 A